## Europäisches Patentamt
## European Patent Office
## Office européen des brevets

(19)

(11) Veröffentlichungsnummer: **0 009 269**
**B1**

(12)           **EUROPÄISCHE PATENTSCHRIFT**

(45) Veröffentlichungstag der Patentschrift: **22.06.83**

(51) Int. Cl.³: **F 02 F 3/02**

(21) Anmeldenummer: **79200460.8**

(22) Anmeldetag: **17.08.79**

(54) Leichtmetallkolben für Brennkraftmaschinen.

(30) Priorität: **27.09.78 DE 2841980**

(43) Veröffentlichungstag der Anmeldung:
**02.04.80 Patentblatt 80/7**

(45) Bekanntmachung des Hinweises auf die Patenterteilung:
**22.06.83 Patentblatt 83/25**

(84) Benannte Vertragsstaaten:
**AT CH DE FR GB IT NL SE**

(56) Entgegenhaltungen:
**AT - B - 175 103
CH - A - 324 833
DE - A - 2 733 269
DE - B - 1 008 968
DE - B - 1 078 387
DE - C - 571 548
DE - C - 667 258
FR - A - 511 210
FR - A - 625 341
US - A - 1 638 898
US - A - 1 958 154**

(73) Patentinhaber: **KARL SCHMIDT GMBH
Christian-Schmidt-Strasse 8/12 Postfach 1351
D-7107 Neckarsulm (DE)**

(72) Erfinder: **Kelm, Walter
Birkenstrasse 8
D-7106 Neuenstadt-Stein (DE)**
Erfinder: **Landau, Ulrich, Ing. grad.
Blumenstrasse 45
D-7101 Oedheim (DE)**

(74) Vertreter: **Fischer, Ernst, Dr.
Reuterweg 14
D-6000 Frankfurt am Main 1 (DE)**

Leichtmetallkolben für Brennkraftmaschinen

Die Erfindung betrifft einen gegossenen Leichtmetallkolben für Ottomotoren, mit geschlossenem Schaftmantel, mit gegenüber dem Schaftmantel weit zur Mitte zurückgesetzten Bolzennaben, mit gegenüber dem Schaftmantel zurückgesetzten mit den Bolzennaben verbundenen Schaftabschnitten und mit am oberen Schaftende eingegossenem Regelglied.

Der Leichtmetallkolben als Übertragungselement der thermischen in mechanische Energie in Brennkraftmaschinen ist durch dauernd wechselnde und hohe Drücke, hohe Temperaturen und Reibung einer sehr starken Beanspruchung unterworfen. Daneben werden an einen derartigen Kolben eine Vielzahl von Anforderungen bezüglich Ölverbrauch, Freßsicherheit, Nutenverschleiß und Geräuscharmut bei allen Betriebszuständen gestellt. Das Ziel aller Entwicklungsarbeiten ist es, dem Leichtmetallkolben mit sehr unterschiedlicher Wärmedehnungszahl innerhalb von Graugußzylindern eine gute Geradführung und damit gleichmäßiges Laufverhalten zu verleihen.

Der aus Leichtmetall bestehende Regelkolben, bei dem mit Hilfe von dehnungshemmenden Stahleinlagen die unerwünschte thermische Durchmesservergrößerung des Kolbens verhindert wird, trägt am besten zu den gestellten Aufgaben bei. Es wird dabei versucht, die Kolbenausdehnung vorzugsweise in Richtung der Bolzenachse umzulenken und das Kolbenspiel in Druck- und Gegendruckrichtung unter möglichst allen Betriebsbedingungen dem Zylinderdurchmesser anzupassen.

Der Zylinder verformt sich unter der thermischen Belastung und den einwirkenden Schraubkräften zur gasdruckdichten Verbindung mit dem Zylinderkopf. Diesen Unrunden und Deformationen muß der Kolben folgen und durch Spielgebung und Elastizität eine Anpassung ermöglichen. Das Zusammenwirken von Kolbenspiel, Regelwirkung und Schaftverformung ist entscheidend für die Geradführung des Kolbens im Zylinder. Bei allen Kolbenkonstruktionen wird zwischen den Anforderungen nach ausreichender Steifigkeit, Gestaltfestigkeit und Regelfunktion ein Kompromiß geschlossen, da sich unter Teil- und Vollastbedingungen einer Brennkraftmaschine ein stets verändertes Betriebsspiel einstellt.

Die Wandstärke und die Abstützung des Kolbenschaftes zur Kolbenbolzennabe sind mitbestimmend für seine Steifigkeit, unter der der Widerstand des Kolbenschaftes gegen Verformung unter Krafteinwirkung zu verstehen ist. Während des Anlagewechsels stellt sich der Leichtmetallkolben im Zylinder schräg und liegt mit der Schaftoberkante auf der einen Seite und mit der Schaftunterkante auf der Gegenseite des Zylinders an. Infolge der Verschiebung der Kraftangriffspunkte ändern sich auch die Steifigkeitsverhältnisse am Schaft, die zu niedrigeren und höheren Werten führen. Eine hohe Steifigkeit führt allgemein zu geringerem Schrägstand des Kolbens im Zylinder und verhindert das Abheben anderer Schaftbereiche.

Weitere Einflußgrößen für das Laufverhalten des Kolbens sind Schleifkurve und Ovalität. Im einzelnen werden durch entsprechende Auslegung der Schleifkurve Druckstellen vermieden sowie ein Abrollen beim Kolbenkippen in den Totpunkten und ein besseres Aufschwimmen auf den Schmierölfilm erreicht. Durch Ovalität des Kolbenschaftes wir die Schaftverformung, die Schaftspannung, Reibleistung und hydrodynamische Schmierung beeinflußt. Eine bekannte Ausführungsform ist der Schlitzmantelkolben, dessen tragende Schaftteile vom heißen Kolbenkopf durch Schlitzung getrennt sind und sich dementsprechend weniger stark ausdehnen. Querschlitze bewirken eine gewisse Regelwirkung, Längsschlitze eine große Schaftelastizität. Bei einem solchen Kolben, wie dieser aus der US—A—1 638 898 bekannt ist, sind die Schaftabschnitte im Bereich der Bolzennaben gegenüber Bolzennaben bzw. dem Schaftmantel in der Weise zurückgesetzt, daß die eine Seite der zurückgesetzten mit der längsgeschlitzten Schaftseite verbundenen Schaftabschnitte unter einem Winkel von >70° und die andere Seite der zurückgesetzten mit der geschlossenen Schaftseite verbundenen Schaftabschnitte rechtwinklig mit den Bolzennaben verbunden sind.

Die Abwinkelung von etwas über 70° dient offensichtlich der Erhöhung der Elastizität auf der geschlitzten Schaftseite. Die geschlitzte Seite eignet sich aber nicht als Druckseite.

Schlitzmantelkolben sind sehr labil, da nach längeren Betriebszeiten bleibende Formänderungen entstehen, die zu stärkeren Geräuschen oder Anrissen des Kolbenschaftes führen. Trotz vieler Verbesserungen der Schlitzformen haben diese Kolben nicht die von den Brennkraftmaschinen gestellten Anforderungen erfüllen können. Der elastische Kolbenschaft der Schlitzmantelkolben federt nicht allein zum Ausgleich der Wärmeausdehnung, sondern vergrößert, bedingt durch die von Arbeitsdruck herrührenden Seitenkräfte, auch die Laufspielgebung bei Belastung der Brennkraftmaschine. Die Anwendung derartiger Kolben hat sich deshalb bei hochbelasteten Brennkraftmaschinen nicht durchsetzen können.

Aufgabe der vorliegenden Erfindung ist es, den Kompromiß zwischen den an einen Leichtmetallkolben gestellten Anforderungen nach ausreichender Steifigkeit, Gestaltfestigkeit und Regelfunktion weiter zu verbessern und den Kolben den unterschiedlichen Bedingungen des Motorbetriebs unter allen Betriebsbedingungen anzupassen.

Die erfindungsgemäße Lösung dieser Aufgabe besteht darin, den Leichtmetallkolben der eingangs beschriebenen Bauart als Regelkolben mit eingegossenem Regelelement so zu gestalten, daß erfindungsgemäß die eine Seite der zurückgesetzten Schaftabschnitte unter einem Winkel von 30 bis 60°, vorzugsweise 45°, zur Bolzenachse verlaufend und die andere Seite der zurückgesetzten Schaftabschnitte unter einem Winkel von 90° zur Bolzenachse verlaufend mit den Bolzennaben verbunden sind.

Zweckmäßigerweise sind die Schaftpartien am offenen Schaftende zum runden, geschlossenen Schaft vereint.

Der Kolben ist somit auf der einen Seite des Kolbenschafts, vorzugsweise auf der Druckseite, als sogenannter Fensterkolben mit weitem Schaftumfang und auf der anderen Seite, vorzugsweise auf der Gegendruckseite, als Kastenkolben ausgebildet.

Der Abstand der unter einem Winkel von 90° zur Bolzenachse verlaufenden Abstützrippen beträgt 65 bis 75 % des Kolbendurchmessers.

Die Art und Anordnung der Regelglieder ist wesentlich von der thermischen und mechanischen Belastung des Regelkolbens innerhalb der Brennkraftmaschine abhängig. Es wird deshalb weiterhin vorgeschlagen, zum Erzielen einer Regelwirkung einen geschlossenen, der Kolbenform angepaßten Stahlblechring im oberen Ende der Schaftpartie im Bereich zwischen den Bolzennaben und kolbenschaftseitigen Ringnute einzugießen.

Bei diesem Regelsystem kann die Regelfähigkeit durch die Anordnung eines Querschlitzes wenigstens auf der einen Seite der Schaftpartie in der kolbenschaftseitigen Ringnute auf 80 bis 90° des Kolbenumfangs begünstigt werden.

Eine dazu abgestimmte Schleifkurve kann zu einem gleichmäßigen Spiel, gutem Tragbild und geringeren Schaftverformungen sowie zu besseren Laufeigenschaften führen.

Weiterhin wird im Rahmen einer weiteren Ausgestaltung der Erfindung vorgeschlagen, den Kolben mit einem oder zwei eingegossenen segmentförmigen Stahlregelgliedern, die am Innenumfang der tragenden Schaftflächen im Bereich der Schaftoberkante angeordnet sind, zu versehen. Die Verklammerung der Stahlregelglieder erfolgt in den Bolzennaben. Für eine gute Abstützung der Kolbenschäfte sorgt ein wulstartiger, innerer Umguß, der sich von der Kolbeninnenkontur als Verlängerung vom Kolbenkopf zwischen den Bolzennaben erstreckt. Die Art der Regelung kann durch Bearbeiten der kolbenschaftseitigen Ringnute, wobei die engegossenen Stahlregelglieder an den Oberkanten freigelegt werden, stark beeinflußt werden.

Es ist prinzipiell auch möglich, die Druckseite des Leichtmetallkolbens als Kastenkolben und die Gegendruckseite als Fensterkolben mit oder ohne Regelglied und Querschlitz auszubilden, wenn die thermische Durchmesservergrößerung und Laufspielgebung dies zulassen.

Die erfindungsgemäßen Maßnahmen führen entsprechend der Gestaltung der Brennkraftmaschine zu einem günstigen Laufverhalten des Kolbens auch nach langer Maschinenlaufzeit, da die durch Querkräfte verursachte Kippbewegung durch Schaftstabilität und gleichmäßige Flächenpressung auf der einen Anlageseite und gutes Regelverhalten mit gleichmäßiger theoretischer Überdeckung auf der gegenüberliegenden Anlagefläche verhindert wird. Die Kombination von verformungssteifem und durch Querschlitz elastischem Regelkolben bewirkt die für die Geräuschverbesserung entscheidend notwendige Geradführung im Zylinder.

Der erfindungsgemäß gestaltete Leichtmetallkolben ist in den Zeichnungen dargestellt und wird im folgenden erläutert. Es zeigen:

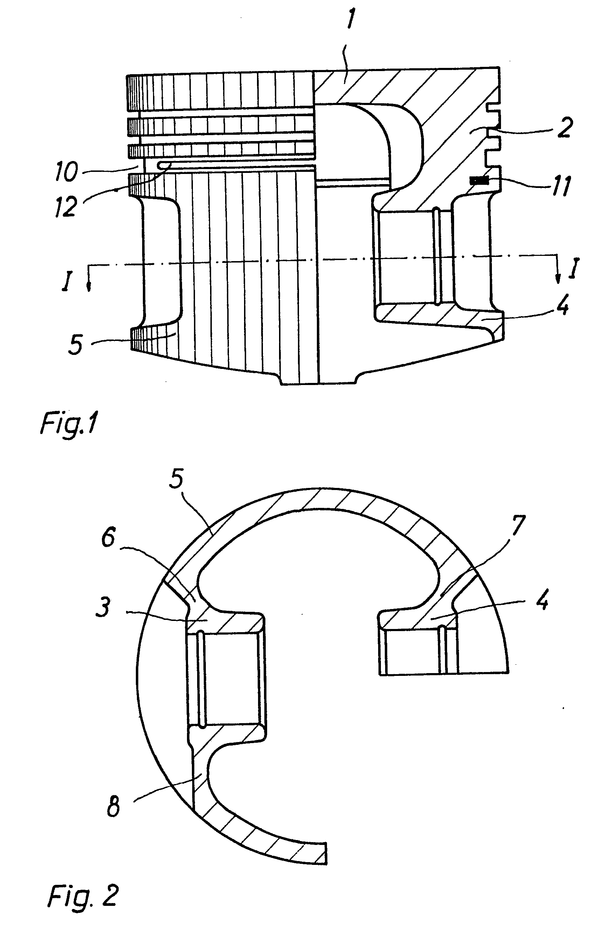

Fig. 1 einen Teillängsschnitt durch den Kolben entlang der Ebene der Kolbenbolzenrichtung und der Ebene der Druck-Gegendruck-Richtung.

Fig. 2 einen Querschnitt entlang der Schnittlinie I—I der Fig. 1.

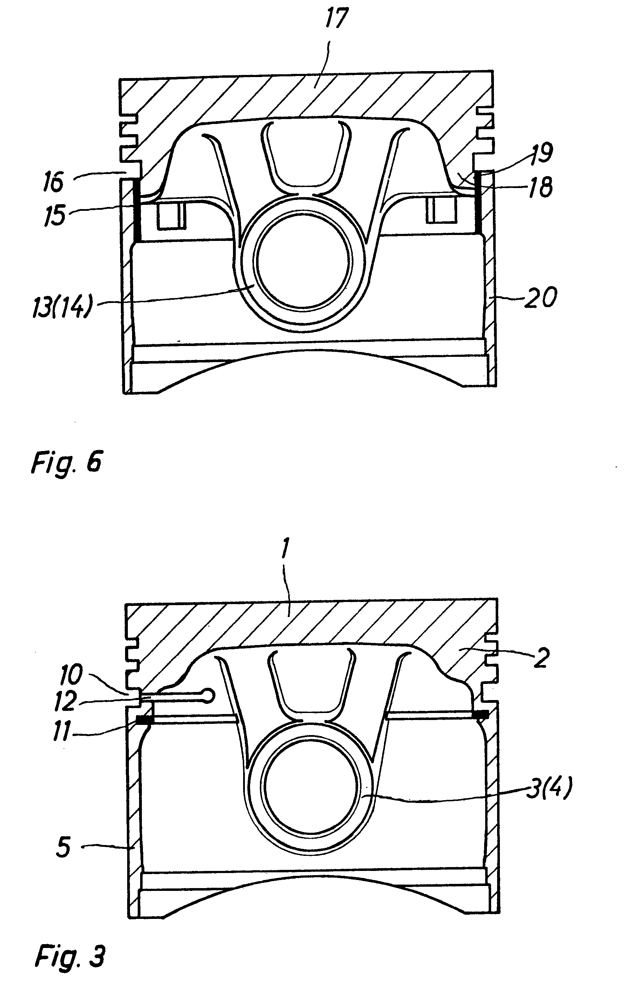

Fig. 3 einen Längsschnitt durch den Kolben gemäß Fig. 1 entlang der Ebene der Druck-Gegendruck-Richtung.

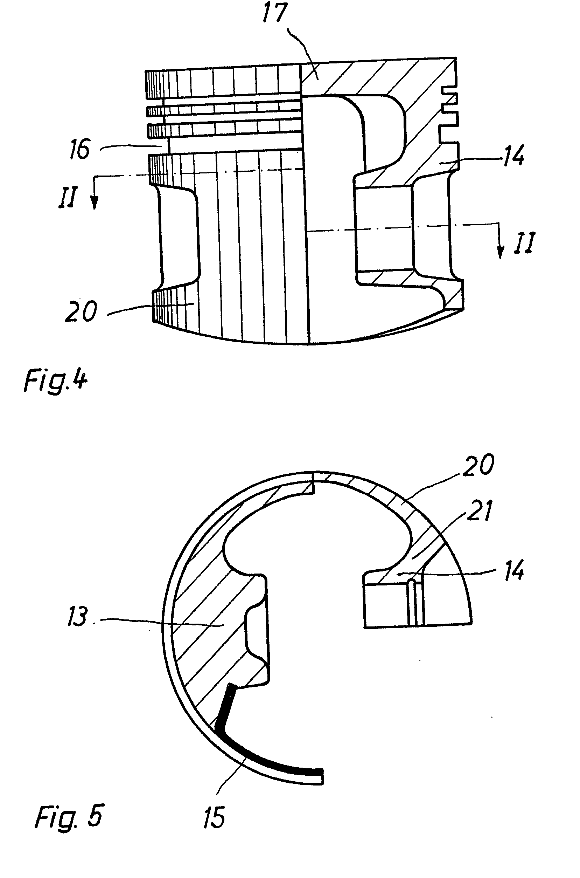

Fig. 4 einen Teillängsschnitt durch einen Kolben entlang der Ebene der Kolbenbolzenrichtung und der Ebene der Druck-Gegendruck-Richtung.

Fig. 5 einen Querschnitt durch den Kolben in der Schnittebene II—II der Fig. 4.

Fig. 6 einen Längsschnitt durch den Kolben gemäß Fig. 4 entlang der Ebene der Druck-Gegendruck-Richtung.

Zur Erreichung des Regeleffektes und der Stabilität des Kolbenschaftes gegen bleibende Formänderung ist der sich vom Kolbenboden 1 über das die Kolbenringe tragende Ringfeld 2 und den Bolzennaben 3, 4 anschließende unsymmetrisch gestaltete Kolbenschaft 5 derart angeordnet, daß die eine Schaftpartie (Druckseite) über unter einem Winkel von 45° zur Bolzenachse verlaufende Abstützrippen 6, 7 mit den Bolzennaben 3, 4 verbunden ist. Die gegenüberliegende Schaftpartie (Gegendruckseite) ist mit unter einem Winkel von 90° zur Bolzenachse verlaufenden Abstützrippen 8 gegen die Bolzennaben 3, 4 abgestützt. Am offenen Schaftende unterhalb der Bolzennaben 3, 4 sind die beiden Schaftpartien zu einem runden geschlossenen Schaft miteinander verbunden.

Im Bereich des oberen Schaftendes ist unterhalb der kolbenschaftseitigen Ringnute 10 ein geschlossener Stahlblechring 11 eingegossen. Durch den Querschlitz 12 wird der Wärmefluß vom Kolbenkopf 1 zum Kolbenschaft gehindert, wodurch eine Temperaturerniedrigung und damit eine geringere Ausdehnung erreicht werden.

Für höherbelastete Brennkraftmaschinen kann der Leichtmetallkolben so gestaltet sein, daß in den Bolzennaben 13, 14 ein segmentförmiges Stahlglied 15 verankert ist, das auf der Druck- und Gegendruckseite oder nur einseitig zur notwendigen Regelwirkung eingegossen ist. Das Stahlglied 15 ist in der Weise eingegossen, daß es bei Bearbeitung der Ringnute 16 an seiner Oberkante angeschnitten ist. Zwischen Stahlglied 15 und dem auf der Innenseite am Kolbenkopf 17 befindlichen angegossenen Wulst 18 ist ein Spalt 19 vorhanden, der bei Erwärmung des Kolbens geschlossen wird, so daß der Wulst 18 die Schaftoberkante des Kolbenschafts 20 abstützt. Die Regelwirkung ist im Zusammenhang mit den über die unter einem Winkel von 45° bzw. 90° zur Bolzenachse verlaufenden Rippen 21 abgestützten Schaftpartien den motorseitig bedingten Forderungen anpassbar.

## Patentansprüche

1. Gegossener Leichtmetallkolben für Ottomotoren, mit geschlossenem Schaftmantel, mit gegenüber dem Schaftmantel weit zur Mitte zurückgesetzten Bolzennaben, mit gegenüber dem Schaftmantel zurückgesetzten mit den Bolzennaben verbundenen Schaftabschnitten und mit am oberen Schaftende eingegossenem Regelglied, gekennzeichnet durch die Kombination nachfolgender Merkmale
a) die eine Seite der zurückgesetzten Schaftabschnitte ist (6, 7, 21) unter einem Winkel von 30 bis 60° zur Bolzenachse verlaufend mit den Bolzennaben (3, 4) verbunden,
b) die andere Seite der zurückgesetzten Schaftabschnitten (8) ist unter einem Winkel von 90° zur Bolzenachse verlaufend mit den Bolzennaben (3, 4) verbunden.

2. Leichtmetallkolben nach Anspruch 1, dadurch gekennzeichnet, daß die eine Seite der zurückgesetzten Schaftabschnitte (6, 7, 21) unter einem Winkel von 45° zur Bolzenachse verlaufend mit den Bolzennaben (3, 4) verbunden ist.

3. Leichtmetallkolben nach Anspruch 1 und/ oder 2, dadurch gekennzeichnet, daß der Abstand der unter einem Winkel von 90° zur Bolzenachse verlaufenden Schaftabschnitte (8) 65 bis 75 % des Kolbendurchmessers beträgt.

4. Leichtmetallkolben nach einem oder mehreren der Ansprüche 1 bis 3, dadurch gekennzeichnet, daß am oberen Ende der Schaftpartie im Bereich zwischen den Bolzennaben (3, 4) und der kolbenschaftseitigen Ringnute (10) ein geschlossener Stahlblechring (11) eingegossen ist.

5. Leichtmetallkolben nach einem oder mehreren der Ansprüche 1 bis 4, dadurch gekennzeichnet, daß innerhalb der kolbenschaftseitigen Ringnute (10) wenigstens die eine Seite der Schaftpartie auf 80 bis 90° des Umfangs durch einen Querschlitz (12) vom Kolbenboden (1) getrennt ist.

6. Leichtmetallkolben nach einem oder mehreren der Ansprüche 1 bis 5, dadurch gekennzeichnet ein am Innenumfang wenigstens einer tragenden Schaftfläche im Bereich der Schaftoberkante angeordnetes segmentförmiges, in den Bolzenaugen (13, 14) verklammertes Stahlregelglied (15).

7. Leichtmetallkolben nach einem oder mehreren der Ansprüche 1 bis 6, dadurch gekennzeichnet, daß die segmentförmigen Stahlregelglieder (15) von einem Wulst (18) gestützt sind, der sich von der Innenseite des Kolbenkopfes (17) als Verlängerung zwischen die Bolzennaben (13, 14) erstreckt.

8. Leichtmetallkolben nach einem oder mehreren der Ansprüche 1 bis 7, dadurch gekennzeichnet, daß die Stahlregelglieder (15) im Bereich ihrer Oberkante nahezu auf ihrem ganzen Umfang durch mechanische Bearbeitung der kolbenschaftseitigen Ringnute (16) freigelegt sind.

## Revendications

1. Piston coulé en métal léger pour moteurs à allumage commandé, comprenant une jupe fermée, des bossages pour l'axe très en retrait vers le milieu par rapport à la jupe, des sections de jupe qui sont reliées aux bossages pour l'axe et qui sont en retrait par rapport à la jupe, et un élément de réglage coulé à l'extrémité supérieure de la jupe, caractérisé par la combinaison des dispositions suivantes:
a) l'un des côtés des sections de jupe en retrait est relié (6, 7, 21) aux bossages (3, 4) pour l'axe en s'étendant suivant un angle de 30 à 60° par rapport à l'axe du piston,
b) l'autre côté des sections de jupe (8) en retrait est relié aux bossages (3, 4) pour l'axe en s'étendant suivant un angle de 90° par rapport à l'axe du piston.

2. Piston en métal léger suivant la revendication 1, caractérisé en ce que l'un des côtés des sections de jupe (6, 7, 21) en retrait est relié aux bossages (3, 4) pour l'axe en s'étendant suivant un angle de 45° par rapport à l'axe du piston.

3. Piston en métal léger suivant la revendication 1 ou 2, caractérisé en ce que la distance entre les sections de jupe (8) s'étendant suivant un angle de 90° par rapport à l'axe du piston représente de 65 à 75 % du diamètre du piston.

4. Piston en métal léger suivant l'une ou plusieurs des revendications 1 à 3, caractérisé en ce qu'à l'extrémité supérieure de la partie de la jupe dans la région comprise entre les bossages (3, 4) pour l'axe et la gorge de segment (10) se trouvant du côté de la jupe du piston est coulée une bague (11) fermée sur elle-même en tôle d'acier.

5. Piston en métal léger suivant l'une ou plusieurs des revendications 1 à 4, caractérisé en ce qu'à l'intérieur de la gorge de segment (10) se trouvant du côté de la jupe du piston, au moins l'un des côtés de la partie de la jupe est séparé du fond du piston (1) sur 80 à 90° du pourtour par une fente transversale (12).

6. Piston en métal léger suivant l'une ou plusieurs des revendications 1 à 5, caractérisé par un élément de réglage (15) en acier qui est agrafé dans les bossages (13, 14) pour l'axe, qui est en forme de segment et qui est disposé sur le pourtour intérieur d'au moins une surface porteuse de la jupe dans la région du bord supérieur de la jupe.

7. Piston en métal léger suivant l'une ou plusieurs des revendications 1 à 6, caractérisé en ce que les éléments de réglage (15) en acier en forme de segment sont supportés par un bourrelet (18), qui s'étend depuis le côté intérieur de la tête du piston (17) sous forme d'un prolongement entre les bossages (13, 14) pour l'axe.

8. Piston en métal léger suivant l'une ou plusieurs des revendications 1 à 7, caractérisé en ce que les éléments de réglage (15) en acier sont à découvert dans la région de leur bord supérieur presque sur tout leur pourtour par usinage mécanique de la gorge de segment (16) se trouvant du côté de la jupe du piston.

**Claims**

1. A cast light-alloy piston for internal combustion engines comprising a closed skirt, piston pin bosses widely recessed against the skirt, to the piston pin axis skirt portions which are connected to the piston pin bosses and are recessed against the skirt and an expansion control member cast integral at the upper end of the skirt, characterized by the combination of the following features:

a) the one side of the recessed portions (6, 7, 21) of the skirt is connected to the piston pin bosses (3, 4) at an angle of 30 to 60 degrees to the piston pin axis,

b) the other side of the recessed portions (8) of the skirt is connected to the piston pin bosses at an angle of 90° to the piston pin axis.

2. A light-alloy piston according to claim 1, characterized in that the one side of the recessed portions (6, 7, 21) of the skirt is connected to the piston pin bosses (3, 4) at an angle of 45° to the piston pin axis.

3. A light-alloy piston according to claim 1 and/or 2, characterized in that the spacing of the other recessed portions (8) which extend at an angle of 90° to the piston pin axis is 65 to 75% of the piston diameter.

4. A light-alloy piston according to any of claims 1 to 3, characterized in that a closed ring (11) of sheet metal is embedded in the skirt casting in the upper end of the skirt in the region between the piston pin bosses (3, 4) and the lowermost ring groove (10).

5. A light-alloy piston according to any of claims 1 to 4, characterized in that at least one side of the skirt is separated on 80 to 90 degrees of the periphery from the piston head (1) by a transverse slot (12) in the lowermost ring groove (10).

6. A light-alloy piston according to any of claims 1 to 5, characterized in that a segment-shaped expansion control member (15) of steel is arranged adjacent to the top edge of the skirt at the inside peripheral surface of at least one load-carrying skirt portion and is locked in the piston pin bosses (13, 14).

7. A light-alloy piston according to any of claims 1 to 6, characterized in that the segment-shaped expansion control member (15) of steel are supported by a bead (18), which extends as an extension from the inside surface of the piston head (17) and between the piston pin bosses (13, 14).

8. A light-alloy piston according to any of claims 1 to 7, characterized in that the top edge of the expansion control members (15) of steel has been exposed almost throughout their periphery by a machining of the lowermost ring groove (16).

Fig.1

Fig. 2

**Fig. 6**

**Fig. 3**

Fig. 4

Fig. 5